Europäisches Patentamt

European Patent Office

Office européen des brevets

(19)

(11) Veröffentlichungsnummer: **0 093 941**

**B1**

(12) **EUROPÄISCHE PATENTSCHRIFT**

(45) Veröffentlichungstag der Patentschrift:
15.01.86

(21) Anmeldenummer: **83104060.5**

(22) Anmeldetag: **26.04.83**

(51) Int. Cl.⁴: **B 23 P 9/00**

(54) Verfahren zum Herstellen massgerechter, definierte tribologische Eigenschaften aufweisende, Oberflächen von Werkstücken aus kohlenstoffhaltigem Gusseisen.

(30) Priorität: **12.05.82 DE 3217818**

(43) Veröffentlichungstag der Anmeldung:
**16.11.83 Patentblatt 83/46**

(45) Bekanntmachung des Hinweises auf die Patenterteilung:
**15.01.86 Patentblatt 86/3**

(84) Benannte Vertragsstaaten:
**DE FR GB IT**

(56) Entgegenhaltungen:
**DE-A-2 531 013**
**DE-A-3 119 847**

(73) Patentinhaber: **AUDI AG, Postfach 220, D-8070 Ingolstadt (DE)**

(72) Erfinder: **Heck, Klaus, Krummenauerstrasse 4, D-8070 Ingolstadt (DE)**
Erfinder: **Lindner, Horst, Silesiusstrasse 1, D-8070 Ingostadt (DE)**

(74) Vertreter: **Le Vrang, Klaus, AUDI AG Postfach 220 Patentabteilung, D-8070 Ingolstadt (DE)**

## Beschreibung

Die Erfindung betrifft ein Verfahren zum Herstellen maßgerechter, definierte tribologische Eigenschaften aufweisende, Oberflächen von Werkstücken aus kohlenstoffhaltigem Gußeisen, insbesondere von Zylindern von Brennkraftmaschinen, gemäß dem Oberbegriff des Patentanspruches 1.

Ein derartiges Verfahren, insbesondere zum Herstellen der Zylinderlaufbahnen von Brennkraftmaschinen, ist in der EP-A 0 065 645 angegeben, bei der es sich um einen Stand der Technik nach Artikel 54(3) EPÜ handelt. Bei diesem Verfahren wird die Oberfläche bzw. die Zylinderlauffläche in mehreren Arbeitszyklen jeweils einem elektrochemischen Abtrag und einem mechanischen, reibplattierenden Abtrag unterzogen, wodurch eine maßhaltige, tribologisch günstige Oberfläche erzielt werden kann. Beim mechanischen Abtrag der elektrolytisch behandelten Oberfläche wird das vorstehende Graphit abgetragen, ohne daß dabei die offenen Graphitlamellen und entstandenen Taschen durch benachbartes, metallisches Material zugeschmiert werden. Zusätzlich werden meist Oberflächenbestandteile des Grundmaterials, vor allem Mischkristalle, abgerieben und anschließend aufplattiert. Dabei wird eine Oberfläche erhalten, bei welcher tragende, ebene Plateaus, die z. T. mit Graphit, Mischkristallen und/oder etwaigen Elektrolyserückständen plattiert sind, mit offenen Graphitlamellen abwechseln. Eine solche Oberfläche hat im Gegensatz zu bisherigen hellen Oberflächen ein dunkelglänzendes Aussehen.

Bei der serienmäßigen Herstellung derartiger Oberflächen hat es sich als problematisch erwiesen, definierte Oberflächenstrukturen beliebig reproduzierbar herzustellen. Die Gründe sind u. a. hinsichtlich ihrer chemischen Zusammensetzung und mechanischen Eigenschaften toleranzbedingt unterschiedliche Werkstoffe der zu bearbeitenden Werkstücke sowie Toleranzen bei deren Vorbearbeitung.

Aufgabe der Erfindung ist es, ein insbesondere für eine Serienfertigung geeignetes Verfahren der gattungsgemäßen Art aufzuzeigen, welches die Herstellung definierter, tribologisch günstiger, maßhaltiger Oberflächen gleichbleibender Qualität sicherstellt.

Diese Aufgabe wird erfindungsgemäß mit den kennzeichnenden Merkmalen des Patentanspruches 1 gelöst. Wie von den Erfindern erkannt wurde, kann durch Festlegung eines definierten Verhältnisses zwischen dem elektrochemischen und dem mechanischen Oberflächenabtrag des letzten Arbeitszyklus ZL und durch dessen vorherige Einberechnung in das Gesamtabtragsmaß eine gleichbleibende, definierte Oberflächenqualität erzielt werden. Dabei wird bevorzugt ein metallisch tragender Plateauanteil von 40 - 65 % der Oberfläche angestrebt. Eine derartige Oberfläche hat sich für Zylinderlaufbahnen von Brennkraftmaschinen als besonders günstig und geeignet erwiesen.

Erfindungsgemäß wird dabei so verfahren, daß zunächst ein erster Arbeitszyklus mit konstanten Vorgaben zum elektrochemischen und mechanischen Abtrag erfolgt, so daß vorteilhaft durch Vergleich des theoretisch vorgegebenen Abtrages mit dem tatsächlichen Abtrag verfahrenswesentliche Rückschlüsse für die weiteren Arbeitszyklen Zn und die letztendlich angestrebte Oberflächenqualität gezogen werden können. Dadurch wird eine hinsichtlich der reproduzierbaren Oberflächenqualität und einer möglichst kurzen Fertigungszeit relevante Prozeßregelung geschaffen.

Die Patentansprüche 2 und 3 kennzeichnen zweckmäßige Verfahrensschritte, welche fortlaufend vorzugsweise über einen Prozessor während der Fertigung vollzogen werden. Der Prozessor errechnet nach Maßgabe der tatsächlichen Werkstückmaße das Gesamtabtragsmaß, daß jeweilige Verhältnis zwischen theoretischem und tatsächlichem Abtrag und ermittelt unter Berücksichtigung des errechneten, letzten Abtragsmaßes ZL die erforderlichen Zwischen-Arbeitszyklen Zn.

Ein Ausführungsbeispiel der Erfindung ist im folgenden mit weiteren Einzelheiten näher beschrieben. Die Zeichnung zeigt in

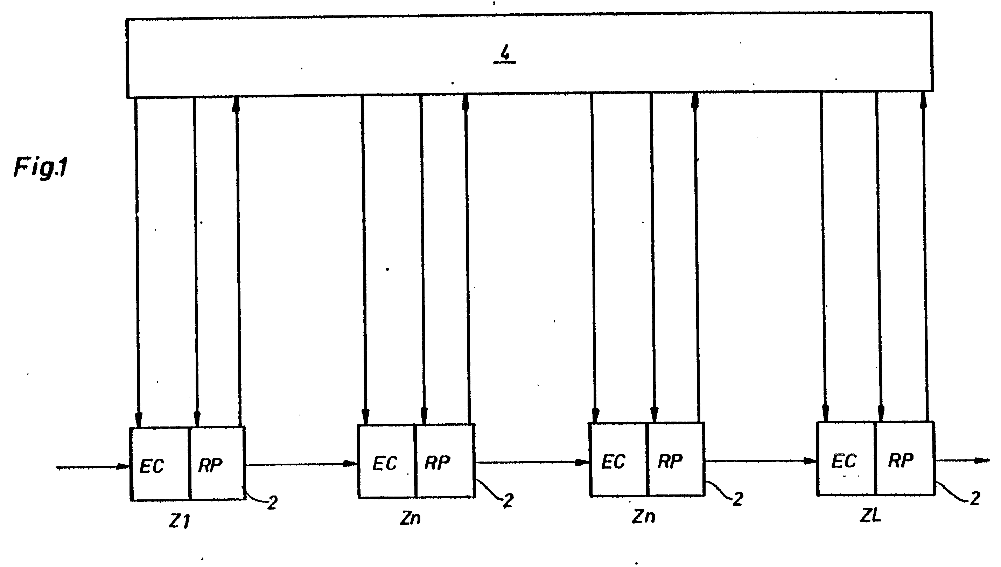

Fig. 1 ein das erfindungsgemäße Verfahren veranschaulichendes Blockschaltbild zur Fertigung von Zylindern von Brennkraftmaschinen in vier Arbeitszyklen und

Fig. 2 ein Diagramm, welches den Zusammenhang zwischen dem Werkstückabtrag und der Oberflächenstruktur aufzeigt.

Im Blockschaltbild ist mit 2 ein Werkstück bzw. das Zylindergehäuse einer Brennkraftmaschine bezeichnet, dessen Zylinder durch elektrochemisches Bearbeiten (EC) und mechanisches bzw. reibplattierendes Bearbeiten (RP) fertigbearbeitet wird. Hinsichtlich näherer Angaben zum eigentlichen elektrochemischen und reibplattierendem Bearbeiten wird auf die ebenfalls auf die Anmelderin zurückgehende DE-Patentanmeldung P 31 19 847. 314 verwiesen.

Die Steuerung der Vorgaben zum elektrochemischen Bearbeiten wie Ladungsmenge je $cm^2$ Oberfläche, Einschaltzeit etc. und zum reibplattierenden Bearbeiten wie Anpreßdruck, Überlappung zwischen Werkstück und Werkzeug etc. erfolgt über einen Prozessor 4.

Am Zylindergehäuse 2 wird zunächst der Durchmesser des vorgebohrten Zylinders beispielsweise nach dem Staudruck-Meßverfahren ermittelt und dem Prozessor 4 eingegeben. Der Prozessor 4 steuert zunächst im fest vorgegebenen Verhältnis den ersten Arbeitszyklus Z1 bzw. die erste elektrochemische und reibplattierende Bearbeitung des Zylinders.

Nach Durchführung von Z1 wird wiederum der Zylinderdurchmesser Ø Z1 gemessen und dem Prozessor 4 mitgeteilt. Im Prozessor 4 werden folgende logische Operationen ausgeführt:

1. Ermitteln des tatsächlichen Abtrages $\Delta$ Ø Z1

im Vergleich zum entsprechend den festen Vorgaben zu Z1 theoretischem Abtrag;

2. Ermitteln des bis zum Fertigmaß noch erforderlichen Gesamtabtragsmaßes;

3. Abziehen des für den letzten Arbeitszyklus ZL vorbestimmten Abtragsmaßes $\Delta \varnothing$ ZL vom Gesamtabtragsmaß;

4. Bestimmen der Anzahl von Zwischen-Arbeitszyklen Zn nach Maßgabe des Durchmessers $\varnothing$ Z1 und des tatsächlichen Abtragsmaßes $\Delta \varnothing$ Z1;

5. Bestimmen des Abtragsmaßes $\Delta \varnothing$ Zn für den nächsten Zwischen-Arbeitszyklus Zn und ggf. für weitere Zwischen-Arbeitszyklen Zn.

Vereinfacht errechnet sich das nächste Abtragsmaß

FIG1/20

Die errechneten Vorgaben zum Zwischen-Arbeitszyklus Zn werden wiederum den Bearbeitungsstationen mitgeteilt und die zweite elektrochemische und reibplattierende Bearbeitung in einem festen Verhältnis zueinander entsprechend gesteuert.

Falls der Prozessor 4 aufgrund der eingegebenen und gemessenen Daten keinen weiteren Zwischen-Arbeitszyklus Zn errechnet hat, folgt nach Vermessung des Zylinders und Ermittlung der Daten $\varnothing$ Zn und tatsächliches Abtragsmaß $\Delta \varnothing$ Zn ggf. nach geringfügiger Korrektur der festen Vorgaben zu $\Delta \varnothing$ ZL der Arbeitszyklus ZL. ↯ der Prozessor 4 einen weiteren Zwischen-Arbeitszyklus Zn errechnet, so kann nach Zn wiederum die bereits beschriebene Rechenoperation erfolgen, jedoch mit $\varnothing$ Zn und $\Delta \varnothing$ Zn des vorangegangenen Arbeitszyklus Zn als Ausgangsbasis.

Nach diesen errechneten Vorgaben wird dann der zweite Zwischen-Arbeitszyklus Zn und ggf. weitere Zwischen-Arbeitszyklen Zn und anschließend wie vorstehend bereits angeführt der Arbeitszyklus ZL vollzogen. Nach dem Durchlaufen des ZL wird der Zylinder einer letzten Kontrollmessung unterzogen.

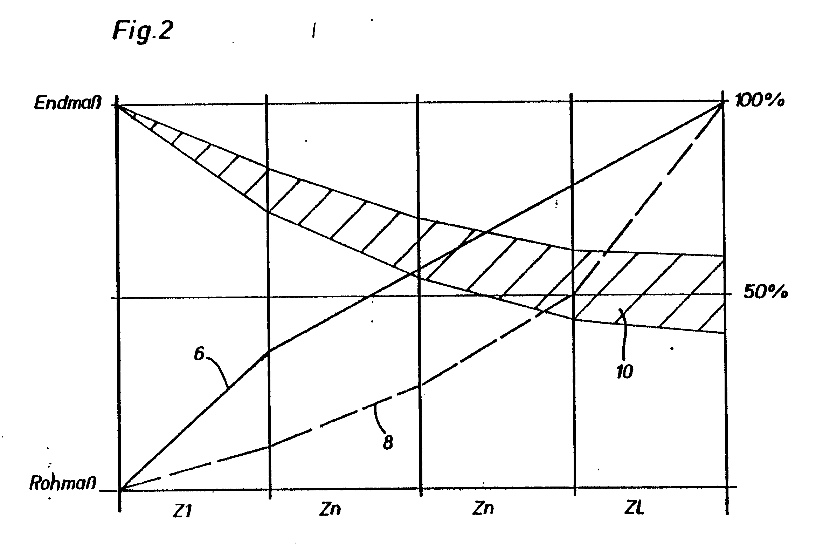

Mit den vorstehend beschriebenen Verfahrensstufen ist es ständig reproduzierbar möglich, die im Diagramm der Fig. 2 veranschaulichte Oberflächenstruktur bei gleichzeitiger, hoher geometrischer Genauigkeit herzustellen. Im Diagramm sind anhand der Linie 6 die Durchmesseraufweitung bzw. der Oberflächenabtrag, anhand der gestrichelten Linie 8 der Anteil der offenen Graphitlamellen und mit dem schraffierten Bereich 10 der Anteil der metallisch tragenden, ebenen Plateaus in Prozent über die vollzogenen Arbeitszyklen Z1 bis ZL aufgetragen. Wie aus dem Diagramm ersichtlich ist, beträgt der metallischen Oberflächenanteil vor Durchführung von Z1 100 %, während die Graphitlamellen aufgrund der rein mechanischen Vorbereitung (Bohren) verquetscht sind.

Durch das beschriebene Verfahren gelingt es, am Ende von ZL exakt bei Erreichung des Endmaßes des Zylinders sämtliche in der Oberflächenstruktur liegenden Graphitlamellen offen auszubilden und den Anteil der metallisch tragenden Plateaus auf die bevorzugten 40-65 % der Oberfläche einzustellen.

## Patentansprüche

1. Verfahren zum Herstellen maßgerechter, definierte tribologische Eigenschaften aufweisende, Oberflächen von Werkstücken aus kohlenstoffhaltigem Gußeisen, insbesondere von Zylindern von Brennkraftmaschinen, welche Oberflächen nach ihrer Vorbearbeitung zumindest drei Arbeitszyklen, bestehend aus jeweils einem elektrochemischen und einem darauffolgenden mechanischen Abtrag, unterzogen werden und dabei Oberflächen mit einem Anteil metallisch tragender Plateaus, die zum Teil mit Graphit und Mischkristallen plattiert sind und mit offenen Graphitlamellen bedeckte Bereiche mit geringer Mikrorauhigkeit geschaffen werden, <u>gekennzeichnet durch</u> folgende Verfahrensschritte:

a) Vermessen der vorbearbeiteten Oberfläche;

b) Durchführen eines ersten Arbeitszyklus $Z_1$ in einem fest vorgegebenen Verhältnis zwischen elektrochemischem und mechanischem Abtrag;

c) Ermitteln des Durchmessers $\varnothing Z_1$ (oder $\varnothing$ Zn) und des tatsächlichen Abtragsmaßes $\Delta \varnothing Z_1$ (oder $\Delta \varnothing$ Zn);

d) Abziehen eines für den letzten Arbeitszyklus $Z_L$ vorbestimmten Abtragsmaßes $\Delta \varnothing Z_L$ vom noch erforderlichen Abtrag, wobei dieser Arbeitszyklus $Z_L$ in einem definierten Verhältnis zwischen elektrochemischem und mechanischem Abtrag durchgeführt wird;

e) Bestimmen der Anzahl von Zwischen-Arbeitszyklen Zn nach Maßgabe des Durchmesser $\varnothing Z_1$ (oder $\varnothing$ Zn) und des tatsächlichen Abtragsmaßes $\Delta \varnothing Z_1$ (oder $\Delta \varnothing$ Zn);

f) Bestimmen des Abtragsmaßes $\Delta \varnothing$ Zn für den nächsten Zwischen-Arbeitszyklus Zn und gegebenenfalls für weitere Zwischen-Arbeitszyklen Zn.

2. Verfahren nach Anspruch 1, <u>dadurch gekennzeichnet</u>, daß die Punkte c bis f nach jedem Zwischen-Arbeitszyklus Zn wiederholt werden.

3. Verfahren nach den Ansprüchen 1 und 2, <u>dadurch gekennzeichnet</u>, daß die Werkstück- und Abtragsmaße nach jedem Bearbeitungsvorgang einem Prozessor (4) zugeführt werden, welcher die elektrochemische und mechanische Bearbeitung steuert.

## Claims

1. Process for the production of dimensionally true surfaces, having well-defined tribological properties, of workpieces made of carbon-containing cast iron especially cylinders of internal combustion engines, which surfaces after their pretreatment are subjected to at least three working cycles consisting of an electrochemical material removal operation followed by a mechanical material removal operation in each case, and producing surfaces having a proportion of metallically supporting plateaus which in part are plated with graphite and mixed crystals, and regions with slight microroughness which are covered with open graphite lamellae, characterised by the following process steps:

a) measuring of the pre-treated surface;

b) carrying out a first working cycle $Z_1$ with a fixedly preset relationship between electrochemical and mechanical material removal;

c) ascertaining the diameter $\emptyset Z_1$ (or $\emptyset Zn$) and the actual material removal amount $\Delta \emptyset Z_1$ (or $\Delta \emptyset Zn$);

d) deducting from the material removal still required a material removal value $\Delta \emptyset Z_L$ predetermined for the last working cycle $Z_L$, this working cycle $Z_L$ being carried out with a specific ratio between electrochemical and mechanical removal of material;

e) determining the number of intermediate working cycles Zn in accordance with the diameter $\emptyset Z_1$ (or $\emptyset Zn$) and with the actual material removal amount $\Delta \emptyset Z_1$ (or $\Delta \emptyset Zn$);

f) determining the amount of removal of material $\Delta \emptyset Zn$ for the next intermediate working cycle Zn and where appropriate for further intermediate working cycles Zn.

2. Process according to claim 1, characterised in that items c to f are repeated after each intermediate working cycle Zn.

3. Process according to claims 1 and 2, characterised in that the workpiece and material removal measurements are fed after each treatment operation to a processor (4) which controls the electrochemical and mechanical treatment.

## Revendications

1 Procédé pour la confection de surfaces de dimensions exactes, présentant des caractéristiques tribologiques définies, de pièces en cours d'usingae en fonte carbonée, en particulier de cylindres de moteurs à combustion interne, surfaces qui, à la suite de leur usinage préalable, sont soumises à au moins trois cycles opératoires consistant chacun en un enlèvement électrochimique de matière suivi d'un enlèvement mécanique de matière, ce qui donne des surfaces présentant une part de plateaux porteurs métalliques qui sont plaqués en partie de graphite et de solutions solides et des zones de plus faible microrugosité, recouvertes de lamelles de graphite, caractérisé par les phases de procédé suivantes:

a) Mesure de la surface pré-usinée;

b) Exécution d'un premier cycle opératoire $Z_1$ dans un rapport prédéfini dixe entre l'enlèvement électrochimique et l'enlèvement mecanique:

c) Détermination du diamètre $\emptyset Z_1$ (ou $\emptyset Zn$) et de la côte d'enlèvement effectif $\emptyset Z_1$ (ou $Zn$);

d) Soustraction d'une cote d'enlèvement $\emptyset Z_L$, prédéterminée pour le dernier cycle opératoire $Z_L$, de l'enlèvement encore nécessaire, ce cycle opératoire $Z_L$ étant exécuté dans un rapport définie entre l'énlèvement électrochimique et l'enlèvement mécanique;

e) Détermination du nombre de cycles opératoires intermédiaires Zn en fonction du diamètre $\emptyset Z_1$ (ou $\emptyset Zn$) et de la côte d'enlèvement $\emptyset Z3_1$ (ou $\emptyset Zn$);

f) Détermination de la côte d'enlèvement $\emptyset Zn$ pour le cycle opératoire intermédaire Zn immédiatement suivant et, le cas echéant pour d'autres cycles opératoires intermédiaires Zn.

2. Procédé selon la revendication 1, caractérisé en ce que les phases c) à f) sont répétées après chaque cycle operatoire intermédiaire Zn.

3. Procédé selon la revendication 1 ou 2, caractérisé en ce que les cotes de la pièce à usiner et d'enlèvement de matière sont introduites, après chaque phase d'usinage, dans un processeur (4) qui commande l'usinage électrochimique et l'usinage mécanique.

Fig.1

0 093 941

Fig.2

*Endmaß*

*Rohmaß*

Z1      Zn      Zn      ZL

100%

50%

6

8

10

0 093 941